# EUROPÄISCHE PATENTSCHRIFT

(11) **EP 2 361 177 B1**
(45) Veröffentlichungstag und Bekanntmachung des Hinweises auf die Patenterteilung: **08.08.2012**
(21) Anmeldenummer: 09775633.2
(22) Anmeldetag: 16.09.2009
(51) Int. Cl.: B65B 51/14, B65B 43/52, B65B 51/16, B65B 61/14, B29C 65/00

(54) **VERSCHLIEßEINRICHTUNG ZUM VERSCHLIEßEN VON VORZUGSWEISE BEUTELFÖRMIGEN VERPACKUNGSEINHEITEN**
CLOSING DEVICE FOR CLOSING PREFERABLY BAG-SHAPED PACKING UNITS
DISPOSITIF DE FERMETURE POUR FERMER DES UNITES D'EMBALLAGE DE PREFERENCE EN FORME DE SACHETS

(30) Priorität: 18.09.2008 AT 14542008
(43) Veröffentlichungstag der Anmeldung: 31.08.2011
(73) Patentinhaber: Westwind Verpackungen GmbH, 8740 Zeltweg (AT)
(72) Erfinder: WALDHERR, Reinhard, 1190 Wien (AT)
(74) Vertreter: Itze, Peter
(86) Internationale Anmeldenummer: PCT/AT2009/000357
(87) Internationale Veröffentlichungsnummer: WO 2010/031097

(56) Entgegenhaltungen:
- WO-A-2007/065951
- CH-A- 380 364
- DE-A1- 3 136 936
- DE-A1- 4 420 808
- DE-U1- 20 216 532
- FR-A- 2 102 967
- US-A- 3 231 449
- US-A- 3 624 836

## Beschreibung

Die Erfindung betrifft eine Verschließeinrichtung gemäß dem Oberbegriff des Anspruches 1, nämlich um eine Einrichtung zum Verschließen von vorzugsweise beutelförmigen Verpackungseinheiten durch Zusammendrücken, welche entlang der zu verschließenden Verpackungsöffnung Bereiche unterschiedlicher Dicke aufweisen, wie etwa Blockbodenbeutel, insbesondere aus beschichtetem oder unbeschichtetem Papier-, Karton-, Kunststoff-, Folien- und/oder Gewebe-Material, welche Verpackungseinheiten zumindest eine integrierte oder auf das Material aufgebrachte, zum dauerhaften Verbinden mit einer anliegenden bzw. angepressten gegenüberliegenden Oberfläche geeignete Versiegelungsoberfläche aufweist, wobei die Verschließeinrichtung eine Presseinrichtung mit zumindest einer Andrückeinrichtung und zumindest einer Gegendrückeinrichtung aufweist, zwischen denen die Verpackungseinheiten im Bereich ihrer Versiegelungsoberflächen gegebenenfalls unter Wärmeaufbringung zusammendrückbar sind, wobei die Andrückeinrichtung und die Gegendrückeinrichtung entlang der zu verschließenden Verpackungsöffnung Zonen unterschiedlichen Drucks und/oder unterschiedlicher Temperatur aufweist. Eine solche Verschließeinrichtung ist durch FR 2 102 967 A bekannt.

Im Gebiet der Verpackungsindustrie **werden** automatisierte **Bearbeitungsstraßen** zum Befüllen und anschließenden Versiegeln unterschiedlicher Verpackungseinheiten verwendet, wobei die Verpackungseinheiten entweder als vorgefertigte Leergebinde der Bearbeitungsstraße zugeführt werden, oder das Verpackungsmaterial der **Bearbeitungsstraße** als Rohmaterial zugeführt wird (etwa als Papier- oder Kartonbögen, oder als auf einer Rolle aufgewickelte Folie) und die Verpackungseinheiten unmittelbar vor dem Befüllen, etwa durch beutelförmiges Verschweißen des abgerollten Verpackungsmaterials oder durch Falten und Verkleben der Bögen, hergestellt werden.

Schüttgüter stellen besondere Anforderungen an die Verpackungseinheiten und die Verpackungseinrichtungen, vor allem wenn sie in Form eines feinen Pulvers verpackt werden müssen, wie dies beispielsweise bei Baustoffen oder anderem körnigen oder pulverförmigem Gut, z.B. im Heimtierbereich, häufig der Fall ist. Diese müssen überdies in sehr großen Mengen abgepackt werden, wobei meist Säcke aus (beschichtetem oder unbeschichtetem) Papier oder Karton, oder (gegebenenfalls gewebeverstärktem) Kunststoff verwendet werden. Aufgrund der großen Füllmengen und dem dadurch bedingten hohen Gewicht sind diese Säcke meist großen Belastungen ausgesetzt, und sollten auch bei einer groben Behandlung auf Baustellen nicht zu leicht reißen oder platzen.

Eine besonders hohe Festigkeit lässt sich mit Blockbodenbeuteln erzielen, wobei diese Beutel nicht nur sehr stabil, sondern aufgrund ihrer eckigen Form in gefülltem Zustand auch besonders gut stapel- und palettierbar sind. Weiters lassen sich die noch unbefüllten Blockbodenbeutel in zusammengefaltetem Zustand gut stapeln, sodass sie meistens vorgefertigt geliefert, und der Verpackungsstraße stapelweise zugeführt werden, wo sie dann vereinzelt und aufgefaltet werden, wobei sie meist von einer Ansaugeinrichtung dem Stapel entnommen, geöffnet und auf eine Förderstrecke gestellt, und von dieser zu den einzelnen Bearbeitungsstationen weiterbewegt werden. Zu diesen Bearbeitungsstationen zählen im Allgemeinen:
- eine Abfüllanlage zum Einbringen des Pulvermaterials in die Säcke,
- eine Rüttelanlage, um Lufteinschlüsse im pulverigen Material zu verhindern,
- eine Falteinrichtung, welche die Öffnung der Beutel von beiden Seiten zusammendrückt, wobei sichergestellt sein muss, dass die Seitenflanken der Blockbodenbeutel korrekt nach innen gefaltet werden,
- eine Beschneideeinrichtung zum Trimmen des oberen Beutelrandes
- eine Versiegelungseinheit, welche die Öffnung des Beutels, beispielsweise durch Heißkleben, Falzen, Vernähen, Verpressen und/oder Verkleben dicht verschließt, und
- eine Palettiervorrichtung, welche die fertig befüllten Säcke auf Paletten stapelt.

Mit vielen der derzeit in Verwendung stehenden Verpackungs- und Verschließanlagen ist für den vorliegenden Anwendungsbereich nur eine verhältnismäßig geringe Taktfrequenz, etwa im Bereich zwischen 10 und 20 verpackten Beuteln pro Minute und Verpackungsstraße, erzielbar, wobei die Entwicklungen der letzten Jahren diese Verarbeitungsgeschwindigkeiten nur in einem geringen und unbefriedigendem Maß beschleunigt haben. Besonders bei den typischerweise verwendeten Versiegelungseinheiten kann ein erhebliches Verbesserungspotential vermutet werden.

Im Falle von Blockbodenbeuteln etwa, sind im Öffnungsbereich an der Innenseite der Materialschicht des Beutels Versiegelungsoberflächen vorgesehen, die meist aus einer oder mehreren Schicht(en) eines Heißschmelzklebestoffs bestehen. Die Beutel werden zum Versiegeln an ihrer Versiegelungszone aneinandergepresst und erhitzt und dadurch miteinander verklebt. Dazu werden zuerst die Seitenflanken der zuvor befüllten Beutel durch eine Vorrichtung nach innen eingefaltet und danach wird der obere Teil des Beutels, etwa durch zusammenlaufende Führungsschienen, zusammengedrückt. Für den eigentlichen Verschließvorgang wird dann der Versiegelungsbereich des Beutels zwischen einer Andrückplatte und einer Gegendrückplatte angeordnet, die danach zusammengeführt werden, um die Beutelöffnung zwischen sich zusammenzudrücken. Je nach dem für die Versiegelungsoberfläche bzw. den Beutel verwendeten Material kann entweder der Druck alleine ausreichen, um die Beutelöffnung auf Grund einer Druckverschweißung zu versiegeln, oder die Versiegelungszone wird zusätzlich durch an den Platten vorgesehene Heizelemente erhitzt, um eine Materialverklebung zu erzielen bzw. einen im Versiegelungsbereich aufgebrachten Heißschmelzklebestoff zu erweichen. Um die Versiegelungsoberflächen an der Innenseite der Verpackung fest miteinander zu verschweißen muss der Druck lange genug aufrecht erhalten werden. Die Verpressungsdauer steht dabei in einem Zusammenhang mit dem zu versiegelnden Material, dem auf das Material aufgebrachten Druck und der aufgebrachten Temperatur. Die minimale erforderliche Verpressungsdauer ist entscheidend für die mit diesem Verfahren erzielbaren Taktzeiten und liegt derzeit üblicherweise in einem Bereich zwischen 3 und 7 Sekunden und wird für jeden Produktionslauf mit dem vorgegebenen Pressdruck empirisch ermittelt. Nach dem Verpressen werden die Platten geöffnet und die geschlossene und versiegelte Verpackungseinheit wird von einem Förderband zur nächsten Bearbeitungsstation weitertransportiert.

Die für ein festes Versiegeln der Beutel erforderlichen Verfahrensparameter, also insbesondere die Temperatur, der Druck und die Anpressdauer, können, wie angeführt, meist nur empirisch ermittelt werden. Der Grund dafür liegt vor allem darin, dass die Hersteller über die von ihnen gelieferten Versiegelungsmaterialien, wie etwa Heißschmelzklebestoffe, oftmals keine genauen Materialkennwerte bekannt geben, wobei sich diese Kennwerte teilweise auch von Charge zu Charge unterscheiden können. Auch die Verpackungsmaterialien variieren hinsichtlich ihrer physikalischen Eigenschaften. Daher kann es notwendig sein, die Parameter der Versiegelungseinheit an neue Bedingungen anzupassen, auch wenn immer noch das selbe Produkt des selben Herstellers (beispielsweise fertig gelieferte Blockbodenbeutel) verarbeitet wird. Ein systematischer Ansatz zur Durchführung dieser Justierungen wird dadurch erschwert, dass in den derzeit am Marke angebotenen Versiegelungseinrichtungen bisher im Allgemeinen keine Sensoren zur Messung des Ist-Drucks und der Ist-Temperatur an der Versiegelungszone vorgesehen sind.

Ein weiteres Problem ergibt sich bei Verpackungseinheiten, die über dem Versiegelungsbereich unterschiedliche Materialdicken aufweisen. Dies ist insbesondere bei Blockbodenbeuteln der Fall, die am Rand aufgrund der eingefalteten Seitenflanken vierfache Materialstärke, zwischen den eingefalteten Seitenflanken jedoch nur zweifache Materialstärke aufweisen. Auch bei anderen Verpackungseinheiten kann dies der Fall sein, etwa aufgrund von in die Versiegelungszone eingebetteten Trageverstärkungen bzw. Tragegriffen.

Zur Behebung des vorstehend genannten Problems offenbart die DE 3136936 A 1 eine Vorrichtung zum Aufbringen von Querschweißnähten an thermoplastischen Kunststoffschlauchfolien mit an den Längskanten nach innen eingelegten Seitenfalten, wobei diese Schweißeinrichtung Schweißbacken aufweist, die derart geteilt sind, dass im Bereich der nach innen eingelegten Seitenfalten zwischen den Press- und Schweißbacken die Einhaltung eines größeren Abstandes ermöglicht ist als im Mittelbereich zwischen den nach innen eingelegten Seitenfalten.

Das Ziel der Erfindung ist es, eine Verschließeinrichtung für die obigen Verpackungseinheiten zu schaffen, die gegenüber dem Stand der Technik hinsichtlich der Prozessstabilität, der Bearbeitungsgeschwindigkeit, der Zuverlässigkeit und der Qualität der mit der Verschließeinrichtung bearbeiteten Produkte verbessert ist. Insbesondere sollen mit der Verschließeinrichtung Blockbodenbeutel, sowie andere Verpackungseinheiten, die über den Verlauf der Verpackungsöffnung unterschiedliche Dicken aufweisen, gleichmäßig und zuverlässig versiegelt werden können, wobei die Verklebung nach Verlassen der Anlage bereits voll belastbar sein soll.

Die Verpackungseinheiten können beispielsweise, ohne die Erfindung darauf beschränken zu wollen, aus Papier-, Karton-, Kunststoff-, Folien- oder Gewebe-Material bestehen, es können jedoch auch verschiedene bekannte Materialien in einer Verpackungseinheit kombiniert zum Einsatz kommen, wie beispielsweise Laminate, coextrudierte Verbunde, mit Metall und/oder Kunststoff beschichtete Materialien, etc. Der Begriff "Schicht" bzw. "Materialschicht" soll auch Materialien miteinbeziehen, die selbst wiederum aus mehreren Schichten - aus jeweils dem selben oder aus unterschiedlichen Materialien - aufgebaut sind. Allgemein soll der Einsatz der Erfindung nicht auf eine bestimmte Art von Verpackungseinheiten beschränkt sein, sondern soll bei allen Verpackungseinheiten Verwendung finden können, bei denen die oben genannten Probleme auftreten.

Erfindungsgemäß werden diese Ziele durch eine Verschließeinrichtung der eingangs genannten Art durch die Merkmale des kennzeichnenden Teiles des Anspruches 1 erreicht, wobei durch die Kühlung zusätzlich auch eine deutliche Erhöhung des Arbeitstaktes der gesamten Vorrichtung erreicht wird. Insbesondere bei höheren Prozessternperaturen beschleunigt die Kühleinrichtung die Aushärtung der Versiegelung.

Darüber hinaus kann die Verschließeinrichtung weiters eine Stanze zum Einbringen einer Trageöffnung in die Verpackungseinheit aufweisen. Die Trageöffnung kann dabei vorzugsweise nach dem Abkühlen in dem zuvor versiegelten Bereich eingebracht werden. Dabei wird die höhere Stabilität des versiegelten Bereichs genutzt, da dort die Trageöffnungen einer höheren Traglast standhalten, ohne auszureißen, als dies im nicht versiegeltem Material der Fall ist.

Insbesondere wenn die Kühleinrichtung aus zwei Kühlplatten besteht, die zum Kühlen von beiden Seiten auf den Versiegelungsbereich gedrückt werden, kann die Stanze in einer Ausführungsform der Erfindung in die Kühleinrichtung integriert sein. Dies ermöglicht eine besonders kompakte Bauweise und verkürzt die Bearbeitungsstrecke.

In einer weiteren vorteilhaften Ausführungsform kann die Stanze eine oder mehrere Schneidekanten aufweisen, von welchen zumindest eine zur Oberseite der Verpackungseinheit hin unterbrochen ist. Die mit dieser Schneidekante ausgestanzte Trageöffnung faltet sich beim Ergreifen an der unterbrochenen Stelle nach hinten um, sodass sich in dem Bereich, der von der Hand umfasst wird (Griffbereich) eine doppelte Materialschicht befindet, welche die Stabilität des Griffbereichs erhöht. Da die Finger der Tragehand die Trageöffnung nur an der gefalteten Stelle ergreifen, werden Schnittverletzungen, die an den scharfen Schnittkanten auftreten können, vermieden, und das Tragegefühl wird durch die bessere Druckaufteilung verbessert, da sich der Griff nicht so stark in die Hand eindrückt.

In einer weiteren Ausführungsform der Erfindung kann die Verschließeinrichtung eine vorzugsweise vor der Presseinrichtung angeordnete Einrichtung zum Beschneiden des oberen Behältnisrandes aufweisen, die gegebenenfalls mit einer Absaugvorrichtung versehen ist. Die Oberkanten der Verpackungseinheiten werden vorzugsweise beschnitten, nachdem sie nach dem Befüllen zusammengefaltet wurden und bevor sie der Presseinrichtung zugeführt werden. Der beim Beschneiden entstehende Staub sowie der abgeschnittene Rand werden dabei von einer Absaugvorrichtung abgesaugt. Dies hat den Vorteil, dass nicht nur das beim Schneiden entstehende Material, sondern auch allfällige Verschmutzungen an der Beutelaußenseite, die vom Befüllen stammen können, abgesaugt werden. Überdies wird bereits von dieser Absaugvorrichtung ein Teil der im Beutel befindlichen Luft ebenfalls angesaugt, so dass unter Umständen auf den oben erwähnte Absaugstutzen zur Erzeugung eines Unterdrucks verzichtet werden kann, da dessen Funktion von der Absaugvorrichtung der Beschneideeinheit erfüllt wird.

In einer weiteren erfindungsgemäßen Ausbildung kann auf den Versiegelungsoberflächen der Verpackungseinheiten ein Heißschmelzklebstoff aufgebracht sein. Auch wenn die erfindungsgemäße Einrichtung mit einer Vielzahl unterschiedlicher Versiegelungsoberflächen verwendet werden kann, bieten Versiegelungsoberflächen aus Heißschmelzklebstoff gute Bearbeitungseigenschaften und ermöglichen eine hohe Versiegelungskraft.

In vorteilhafter Weise können in einer weiteren Ausgestaltung der Erfindung an der Andrückeinrichtung und/oder der Gegendrückeinrichtung Druck- und/oder Temperatursensoren vorgesehen sein. Diese erleichtern ein systematisches Erfassen und Optimieren der Systemparameter beim Einrichten und Justieren der Anlage und dienen im laufenden Betrieb einer begleitenden Qualitätskontrolle.

Eine weitere vorteilhafte Ausführungsform der erfindungsgemäßen Verschließeinrichtung sieht schließlich vor, dass zumindest im Bereich der Presseinrichtung die Verpackungseinheiten auf Höhe ihrer Versieglungsoberflächen zwischen Transportbändern gehalten sind, welche zwischen der Andrückeinrichtung und der Gegendrückeinrichtung durchgeführt sind, wobei im Bereich der Presseinrichtung eine oder mehrer Induktionsspule(n) zum Erwärmen des Transportbandes vorgesehen sind. Eine Bandführung stellt nicht nur eine richtige Positionierung der bearbeiteten Verpackungseinheiten sicher (etwa bei taktgesteuertem Vorschub), sondern sorgt auch für eine räumliche Trennung von Verpackungseinheit und Andrück- bzw. Gegendrückeinrichtung, wodurch letztere gegen Verschmutzungen geschützt sind, die etwa beim Befüllen der Verpackungseinheiten mit feinpulvrigem bzw. Staub bildendem Schüttgut entstehen können, wobei zur Minimierung des Wärmeverlustes die Induktionsspulen dabei entweder in den Andrück- bzw. Gegendrückplatten angeordnet sein können, sodass die Verpackungseinheiten gleichzeitig mit dem Verpressen erhitzt werden, sie können jedoch auch vor oder nach der Presseinrichtung angeordnet sein. Wenn die Presseinrichtung durch ein oder mehrere Rollenpaare gebildet, können die Induktionsspulen vor, zwischen, oder hinter den Rollenpaaren vorgesehen sein. In allen Fällen kann die Wärmeentwicklung genau dort erfolgen, wo sie für den Versiegelungsvorgang erforderlich ist, nämlich unmittelbar an der Verpackungseinheit. Durch eine einfache intermittierende Taktung der Induktionsspulen ist es überdies möglich, das Transportband nur dort aufzuheizen, wo tatsächlich eine Verpackungseinheit gehalten wird, und nicht in den Freiräumen dazwischen.

Die Erfindung wird nunmehr anhand beispielhafter Ausführungsformen unter Bezugnahme auf die beigeschlossenen Zeichnungen eingehend beschrieben. Es zeigen
Fig. 1 eine Draufsicht auf eine Bearbeitungsstraße, in welcher eine erfindungsgemäße Verschließeinrichtung eingesetzt ist,
Fig. 2 eine Vorderansicht des mittleren Bereichs der Bearbeitungsstraße mit einer Falteinrichtung, einer Beschneideeinheit und einer Versiegelungs-Presseinrichtung,
Fig. 3 einen vorderen Bereich der Bearbeitungsstraße von der Beutelzuführung bis zum Eintritt in die Versiegelungseinheit,
Fig. 4 den die Versiegelungseinheit enthaltenden Bereich der Bearbeitungsstraße in schaubildlicher Darstellung schräg von unten her gesehen,
Fig. 5 in schaubildlicher Darstellung eine Falteinrichtung zum Zusammenfalten der Öffnung befüllter Verpackungseinheiten,
Fig. 6 eine erfindungsgemäße Heißversiegelungs-Presseinrichtung in einer Vorderansicht,
Fig. 7 eine Schnittansicht entlang der Linie VII-VII der Fig. 6 durch die Andrückplatten der Presseinrichtung, wobei die federnde Lagerung der Platten für die einzelnen Druckzonen ersichtlich ist,
Fig. 7a eine Schnittansicht entlang der Linie VII-VII der Fig. 6 durch eine weitere Ausführungsform der Andrückplatten der Presseinrichtung, wobei die Platten aus einem elastischen Material gebildet sind und eine profilierte Oberfläche aufweisen,
Fig. 8 die Presseinrichtung in einer Stirnansicht,
Fig. 9 in schaubildlicher schematischer Darstellung die Andrückplatten einer Presseinrichtung, wobei die verschiedenen Heizzonen zu erkennen sind,
Fig. 10 eine Draufsicht einer Kühleinrichtung mit integrierter Stanze zum Einbringen von Tragöffnungen in die versiegelten Beutel,
Fig. 11 die Einheit aus Kühleinrichtung und Stanze in einer Stirnansicht,
Fig. 12 eine schematische Darstellung einer weiteren Ausführungsform einer Presseinrichtung mit federnd gelagerten Andrückrollen, zwei Transportbändern und Induktionsspulen zum Erwärmen des Transportbandes,
Fig. 13 eine schematische Darstellung eines federnd gelagerten Rollenpaars mit geriffelten Mantel-Oberflächen zur Erzeugung einer profilierten Versieglungsoberfläche,
Fig. 14 eine Schnittansicht einer alternativen Ausgestaltung einer Rolle,
Fig. 15 eine Schnittansicht der Rolle entlang der Linie XV-XV der Fig. 14,
Fig. 16 eine schematische Darstellung eines federnd gelagerten Rollenpaars mit einer profilierten Mantel-Oberflächen zur Erzeugung von Längsverlaufenden Pressrillen,
Fig. 17 eine Seitenansicht der Rolle der Fig. 16 und
Fig. 18 eine Seitenansicht einer weiteren, mit einem Waffelprofil versehenen Rolle.
Fig. 19 schematisch eine Draufsicht auf ein Detail der Presseinrichtung mit federnd gelagerten Rollen und dazwischen befindlicher Verpackung.

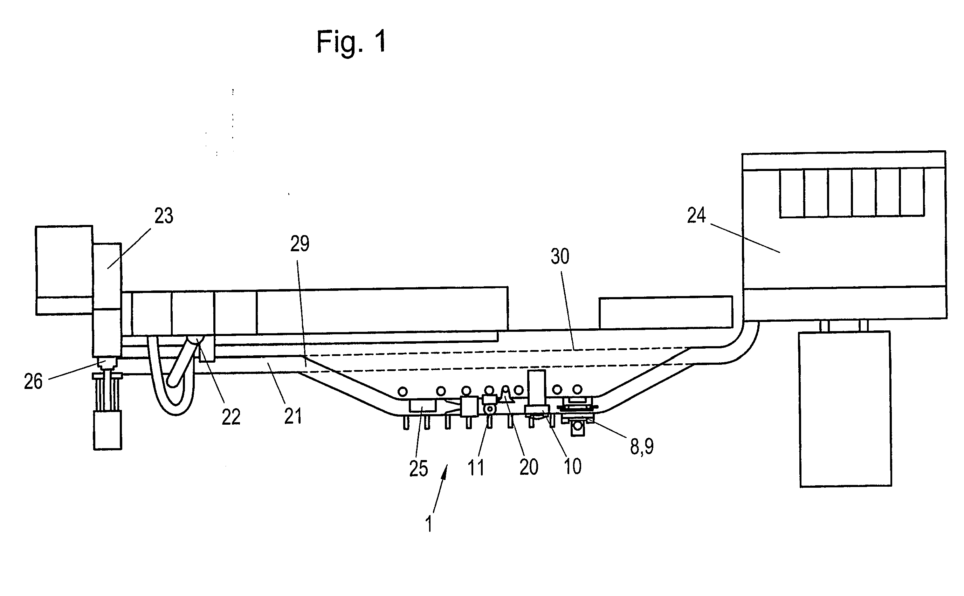

Fig. 1 zeigt eine Draufsicht einer Bearbeitungsstraße mit der erfindungsgemäßen Verschließeinrichtung 1, wobei die einzelnen Bearbeitungsstationen schematisch dargestellt sind. Fig. 1 dient der Erläuterung der einzelnen Bearbeitungsschritte, die zum Befüllen, Verschließen und Palettieren von Verpackungseinheiten 2, insbesondere von Blockbodenbeuteln, erforderlich sind, wobei die Einrichtungen, die die Erfindung verkörpern, in den weiteren Figuren detaillierter dargestellt sind.

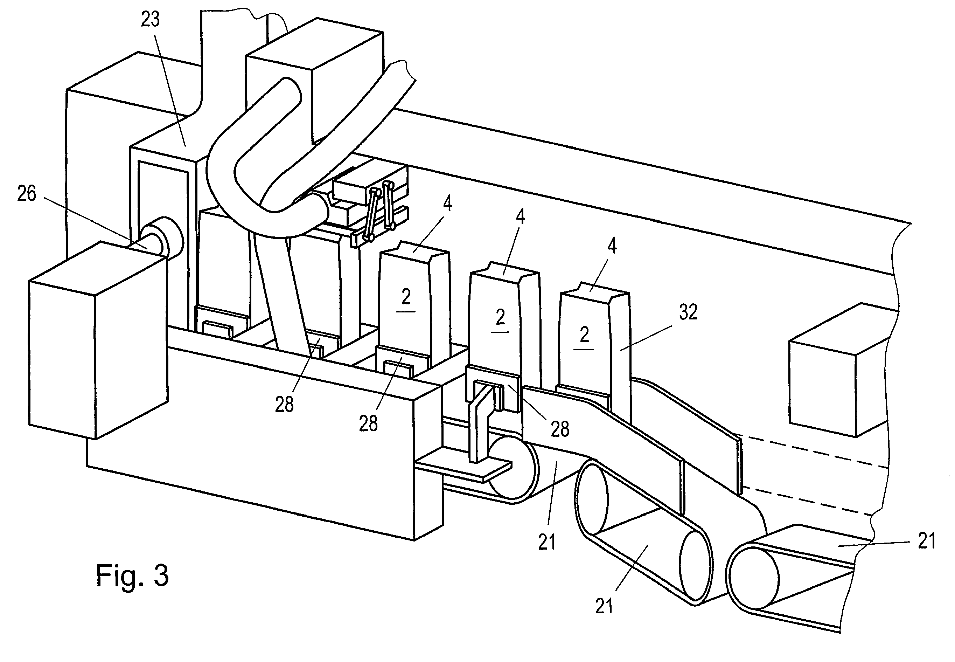

Die Verpackungseinheiten 2, in diesem Fall Blockbodenbeutel, werden der Anlage über eine Beutelzuführung 23 zugeführt, wobei die Beutel entweder von Hand in die Zuführung eingelegt werden, oder in Magazinen bereitgestellt sind, die dann bei Bedarf als ganzes ausgewechselt werden. Die Blockbodenbeutel sind zusammengefaltet und gestapelt, und werden von einer Entnahme- und Auffaltvorrichtung 26 aus der Beutelzuführung 23 entnommen, aufgefaltet und auf ein Förderband 21 gestellt. Das Förderband 21 kann die Verpackungseinheiten 2 getaktet oder kontinuierlich transportieren, wobei zwischen den einzelnen Bearbeitungsstationen auch ein Wechsel zwischen einer kontinuierlichen und einer getakteten Beförderung vorgesehen sein kann. Die geöffneten Beutel werden dann einer Abfüllanlage 22 zugeführt, wobei die Abfüllanlage 22 und die Entnahme- und Auffaltvorrichtung 26 in Fig. 3 nochmals detaillierter dargestellt sind.

Wie der Fig. 3 zu entnehmen ist, ist die Förderanlage 21 im Bereich der Abfüllanlage 22 mit Stützblechen 28 versehen, welche die Seiten der Verpackungseinheiten 2 in ihrem unteren Bereich stützen. Die Stützbleche 28 sind in der Fig. 3 nur schematisch dargestellt und werden vorzugsweise mit den Verpackungseinheiten mitbewegt, wie dies ein Fachmann leicht nachvollziehen wird können. Sie dienen vor allem dazu, die Stabilität der Verpackungseinheiten 2 während des Befüllvorgangs zu erhöhen. Die Abfüllanlage 22 teilt jeder Verpackungseinheit 2 die entsprechende Menge des Füllstoffes zu, wobei es insbesondere bei Staub bildenden, feinpulvrigen Materialien zur Bildung von Luftblasen im Beutel kommen kann. Um die Bildung solcher Luftblasen zu verhindern und den Füllstoff zu komprimieren, können die Verpackungseinheiten 2 im Bereich der Abfüllanlage 22 oder dahinter durch ein Vibrieren der Stützbleche 28 oder mittels einer unter dem Förderband 21 angeordneten Rütteleinrichtung (nicht dargestellt) gerüttelt werden. Durch Rüttelanlagen können diese Lufteinschlüsse meist beim oder nach dem Befüllen entfernt werden, dennoch ist es nicht möglich, die Verpackungseinheiten vollständig (d.h. bis zum unteren Rand der Versiegelungsfläche) zu befüllen, und es muss zwischen dem Schüttgut und der Unterkante des Versiegelungsbereichs immer ein Abstand freigelassen werden. Die befüllten Verpackungseinheiten 2 werden in weiterer Folge von dem Förderband 21 zu den weiteren Bearbeitungsstationen transportiert. Um den Durchsatz zu erhöhen, können die befüllten Verpackungseinheiten gegebenenfalls über eine Weiche 29 auch auf mehrere Bearbeitungsstrecken aufgeteilt werden, wie dies durch die in Strichlinien dargestellte alternative Bearbeitungsstrecke 30 angedeutet ist. Alternativ können, auch bei Vorhandensein alternativer Bearbeitungsstrecken, alle Verpackungseinheiten 2 die gleiche Bearbeitungsstrecke durchlaufen, sodass die alternative Bearbeitungsstrecke 30 zur Wartung oder zum Umrüsten zur Verfügung steht.

Im oberen Bereich der Verpackungseinheiten 2 sind im Beutelinneren Versiegelungsoberflächen 4 vorgesehen, die durch Aneinanderpressen, gegebenenfalls unter Wärmeeinwirkung, miteinander versiegelt werden können. Die Versiegelungsoberflächen 4 können durch eine auf das Verpackungsmaterial aufgebrachte Schicht eines Heißschmelzklebstoffes gebildet sein. Alternativ kann das Verpackungsmaterial selbst durch Wärme- und Druckeinwirkung versiegelbar sein. Die Versiegelungsoberfläche 4 kann entweder nur im oberen Bereich der Verpackung - dem Versiegelungs- oder Verschlussbereich - vorgesehen sein, sie kann sich jedoch auch über die gesamte Fläche des Verpackungsmaterials erstrecken, wenn dies aus erzeugungstechnischen Gründen vorteilhaft ist. Vorzugsweise ist die Versiegelungsoberfläche 4 im Verschlussbereich an der Innenseite der Verpackungseinheit 2 und im Bereich der Seitenflanken 32 auch an der Außenseite der Verpackungseinheit 2 vorgesehen. Die zusätzliche äußere Versiegelungsoberfläche an der Seitenflanke 32 ist zwar für ein Versiegeln der Verpackungsöffnung nicht erforderlich, sie kann jedoch aus ästhetischen Gründen oder aus Gründen der Stabilität der fertigen Verpackung erwünscht sein.

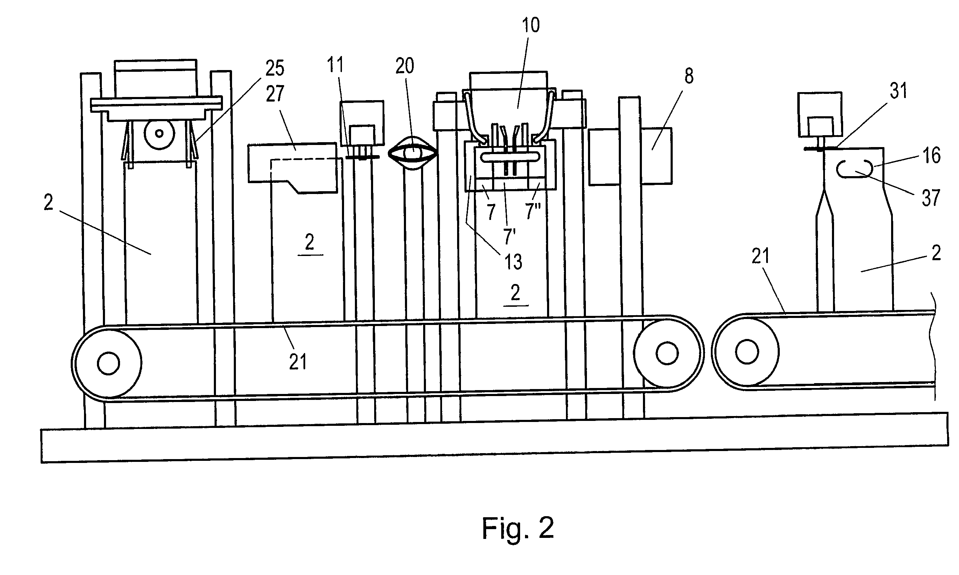

Um die Verpackungseinheiten 2 im Folgenden fest zu verschließen, gelangen diese, wie wieder in Fig. 1 zu erkennen ist, in weiterer Folge zu einer Falteinrichtung 25, einer mit einer Absaugeinrichtung versehenen Beschneideeinrichtung 11, einer Versiegelungspresseinrichtung 10, und einer mit einer Stanze 9 versehenen Kühleinrichtung 8. Dieser Teil der Bearbeitungsstrecke beinhaltet die wesentlichen erfindungsgemäßen Verbesserungen und ist in Fig. 1 nur im Überblick dargestellt, da detaillierte Ausführungsformen in Zusammenhang mit den weiteren Figuren noch eingehend beschrieben werden. Nachdem die Verpackungseinheiten 2 diesen Teil der Bearbeitungsstrecke durchlaufen haben, sind sie versiegelt und mit einer eingestanzten Trageöffnung 37 versehen und werden schließlich von dem Förderband 21 zu einer Palettieranlage 24 weiterbefördert, wo sie mittels bekannter Techniken auf Paletten gestapelt werden. Vor dem Palettieren kann die obere Kante der fertig versiegelten Verpackungseinheiten nochmals bearbeitet werden, etwa durch nochmaliges Beschneiden mit einem Trimmesser 31, wie es in Fig. 2 dargestellt ist.

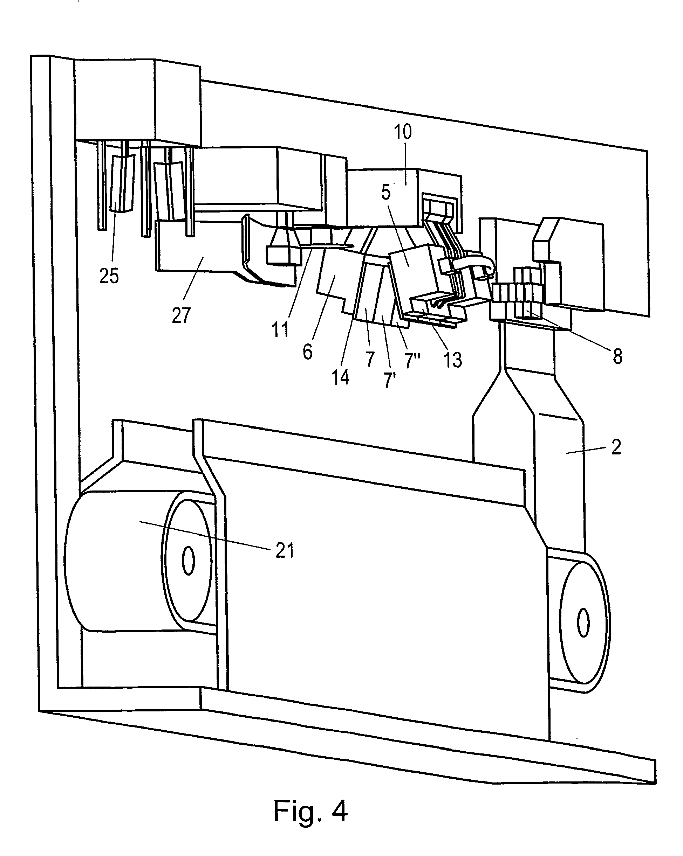

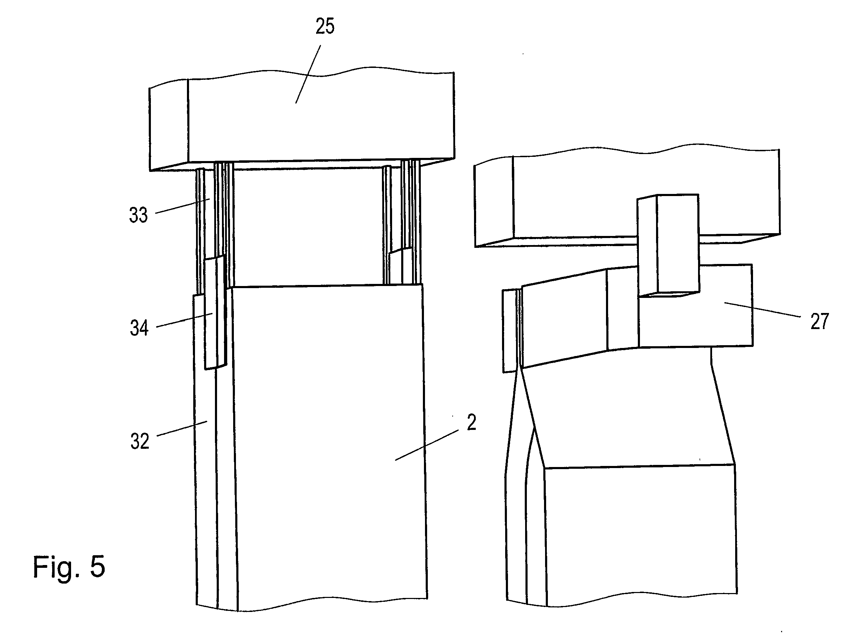

Die für die Versiegelung der Verpackungseinheiten 2 verwendeten Vorrichtungen sind in Fig. 2 in einer Vorderansicht und in Fig. 4 nochmals in einer schaubildlicher Darstellung schräg von unten her gesehen, dargestellt. Die zuvor befüllten Verpackungseinheiten gelangen zuerst zu der Falteinrichtung 25. Diese stellt sicher, dass der Verschlussbereich aller Verpackungseinheiten 2 in der richtigen Ausrichtung zu den nachfolgenden Führungsblechen 27 gelangen, um dort richtig zusammengefaltet zu werden. Wie in Fig. 5 im Detail gezeigt ist, besteht die Falteinrichtung 25 im Wesentlichen aus vier Beutelspreizern 33 und zwei Flankenblechen 34. Von oben wird die Falteinrichtung 25 mit den Beutelspreizern 33 und den Flankenblechen 34 so auf die befüllten Verpackungseinheiten 2 gesenkt, dass die vier Beutelspreizer 33 im inneren der Verpackungseinheit 2 und die Flankenbleche 34 neben den Seitenflanken 32 außerhalb der Verpackungseinheit 2 angeordnet sind. Die Beutelspreizer 33 werden dann ein wenig nach außen bewegt, um die Ecken der Öffnung der Verpackungseinheit 2 zu fixieren, während die Flankenbleche 34 die Flanken 32 nach innen in den Beutel drücken, sodass die in der Mitte der Flanken befindliche Falz im oberen Bereich der Verpackungseinheit ins Beutelinnere ragt. Danach wird die Falteinrichtung 25 wieder nach oben aus der Verpackungseinheit 2 heraus gezogen. Die Verpackungseinheiten 2 werden dann vom Förderband 21 weiterbewegt, wobei der nunmehr für eine korrekte Faltung ausgerichtete Verschlussbereich zwischen zwei Führungsbleche 27 gelangt, zwischen denen der Verschlussbereich mit eingefalteten Seitenflanken 32 zusammengeführt wird. Dabei werden auch die Versieglungsoberflächen 4 im Inneren der Verpackungseinheit 2 und gegebenenfalls die an der Außenseite der Verpackungseinheit 2 an den Seitenflanken 32 vorgesehenen Versiegelungsoberflächen zueinander geführt.

Wie in Fig. 2 zu erkennen ist, ist unmittelbar nach den Führungsblechen 27 eine Einrichtung 11 zum Beschneiden der oberen Kante der Verpackungseinheit 2 vorgesehen. Der abgeschnittene Materialstreifen wird von einer Absaugvorrichtung 20 abgesaugt. Die Absaugvorrichtung 20 dient auch dazu, vom Befüllen an der Verpackung haftende Materialrückstände abzusaugen. Auch Materialrückstände und Verunreinigungen, die sich im Inneren der Verpackungseinheit 2 auf den Versiegelungsoberflächen 4 angesetzt haben, können durch die Absaugvorrichtung 20 entfernt werden, wodurch die Zuverlässigkeit der Versiegelung verbessert wird. Indem die Düse der Absaugvorrichtung 20 unmittelbar an der bereits zusammengeklappten, aber noch nicht versiegelten Öffnung der Verpackungseinheit 2 ansetzt, ist es überdies möglich, auch überschüssige Luft durch den Öffnungsspalt aus der Verpackungseinheit 2 abzusaugen, bevor die Verpackungseinheit 2 versiegelt wird. In der Verpackung nach dem Füllen auf Grund des Sicherheitsabstandes zwischen Füllgut und Versiegelungsbereich verbleibende Luft könnte nach dem Versiegeln dazu führen, dass die derart "aufgeblasenen" Verpackungseinheiten 2 beim Stapeln platzen. Die Absaugvorrichtung 20 sorgt also für kompaktere Gebinde, wobei die Saugkraft so reguliert ist, dass zwar die in der Verpackungseinheit 2 verbliebene Luft, nicht jedoch das Füllmaterial von der Düse angesaugt wird.

Der eigentliche Versiegelungsvorgang wird von einer Andrückeinrichtung 5 und einer Gegendrückeinrichtung 6 durchgeführt, welche den Versiegelungsbereich der Verpackungseinheit vorzugsweise unter Wärmeaufbringung zusammendrücken, wobei die Ausführung der Andrück- 5 und der Gegendrückeinrichtung 6 den Kernpunkt der gegenständlichen Erfindung darstellen. In einer bevorzugten Ausführungsform ist die Andrückeinrichtung 5 und die Gegendrückeinrichtung 6 als Presseinrichtung 10 ausgebildet, der im Folgenden unter Bezugnahme auf die Fig. 2, 4, und 6 bis 9 detailliert beschrieben wird.

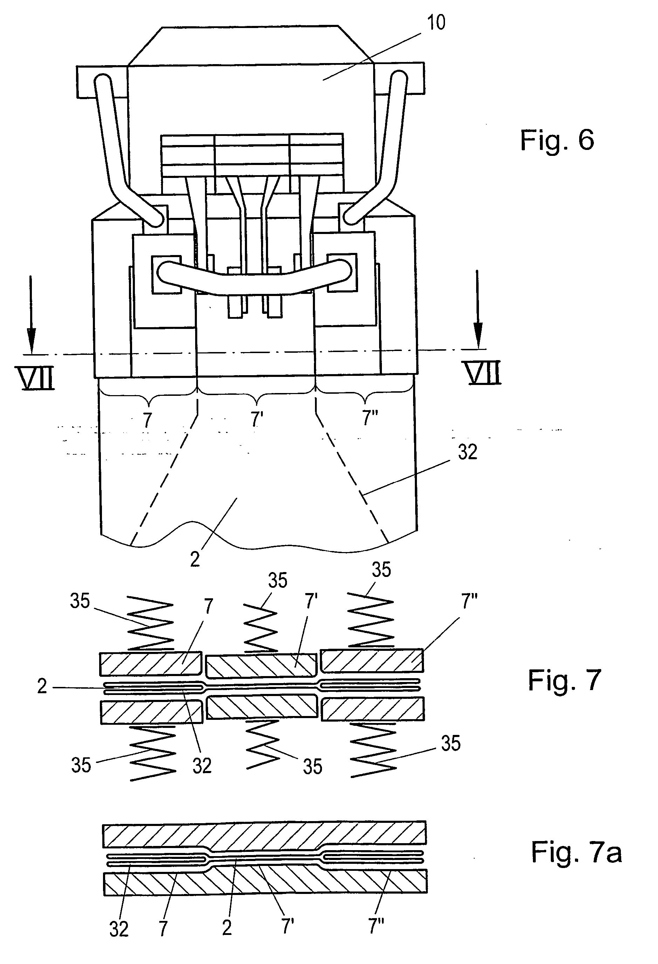

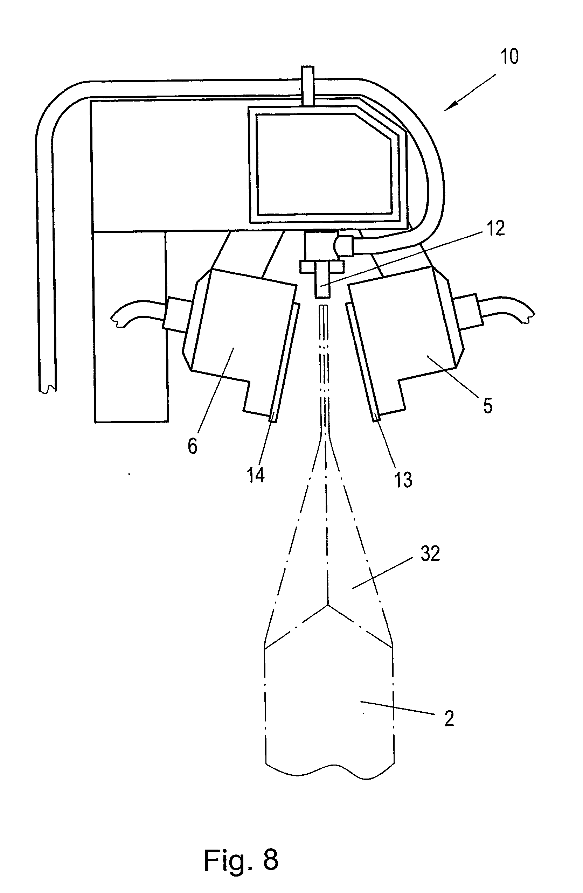

Wie insbesondere aus den Fig. 4 und 8 zu ersehen ist, besteht die Presseinrichtung 10, wie dies auch bei im Stand der Technik bekannten Versiegelungseinrichtungen der Fall ist, aus einer zangenartigen Vorrichtung mit einer Andrückplatte 13 und einer Gegendrückplatte 14, zwischen denen der zu versiegelnde Bereich zusammengedrückt wird. In den Platten 13, 14 (bzw. in den dahinterliegenden Zangenbacken) sind Heizelemente zum Erwärmen der Versiegelungsoberflächen 4 vorgesehen. Im Gegensatz zu herkömmlichen Versiegelungseinheiten, bei denen die Andruck-, bzw. die Gegendrückplatte als im Wesentlichen ebene, gleichmäßig beheizte Platten ausgebildet sind, weisen in der dargestellten erfindungsgemäßen Versiegelungseinheit sowohl die Andrückplatte 13, als auch die Gegendrückplatte 14 je drei Andrückzonen 7, 7', 7" auf, deren Wirkungsweise in Zusammenhang mit Fig. 6 und 7 erläutert werden.

Fig. 6 zeigt eine erfindungsgemäße Presseinrichtung 10 mit einer zum Versiegeln zwischen den Zangenbacken der Presseinrichtung 10 eingespannten Verpackungseinheit 2. Wie aus der obigen Beschreibung hervorgeht, weist jede Verpackungseinheit 2 aufgrund der eingefalteten Seitenflanken 32 im Versiegelungsbereich zumindest drei Bereiche unterschiedlicher Dicke auf: An den Seiten, wo die Seitenflanken 32 zwischen den zwei Seiten der Verpackungseinheit 2 eingefaltet sind, ist die Verpackungseinheit 2 vierlagig, und in der Mitte des Versiegelungsbereichs ist die Verpackungseinheit 2 nur zweilagig. Dies ist beispielsweise bei dem in Fig. 7 geschnitten dargestellten Versiegelungsbereich der zwischen der Andrück- 13 und der Gegendrückplatte 14 eingespannten Verpackungseinheit 2 gut zu erkennen. Die erfindungsgemäße Presseinrichtung 10 trägt dieser Tatsache durch drei Andrückzonen 7, 7' und 7" Rechnung, deren Druck- bzw. Temperatureinstellungen unabhängig voneinander verstellbar sind. Diese Ausführungsform ist sowohl für einen taktgesteuerten, automatisierten Vorschub der Verpackungseinheiten in Verarbeitungsstraßen, als auch für eine manuelle Zuführung bei kleineren Anlagen geeignet. Der Versiegelungsvorgang entspricht im Wesentlichen dem im Stand der Technik verwendeten Verfahren, wobei die Verpackungseinheit zwischen der Andrück- und der Gegendrückplatte zusammengedrückt und gegebenenfalls erhitzt wird. Dadurch, dass sich jedoch sowohl der Druck, als auch die Temperatur der einzelnen Zonen individuell einstellen lässt, können die drei unterschiedliche Zonen zum Versiegeln von unterschiedlich dicken Bereichen der Verpackungseinheit verwendet werden. Auf der für das Versiegeln von Blockbodenbeuteln dreiteilig ausgebildeten Andrück- bzw. Gegendrückplatte entsprechen die beiden seitlichen Zonen den vierlagigen Seitenbereichen des Blockbodenbeutels, die dazwischenliegende Zone entspricht dem zweilagigen Bereich.

Bei herkömmlichen Presseinrichtungen, bei denen die Verpackungseinheiten zwischen zwei ebenen Platten verpresst werden, ist es nicht möglich, den Anpressdruck und die Temperatur so zu wählen, dass sich für jede zu versiegelnde Versiegelungsoberfläche 4 der optimale Anpressdruck ergibt, da immer die dickeren Randbereiche (7, 7") stärker zusammengedrückt werden, als der mittlere Bereich (7). Auch erwärmen sich die weniger dicken Materiallagen schneller als die dickeren Schichten. Bisher musste für die einstellbaren Parameter (Druck, Temperatur, Anpressdauer) immer ein Kompromiss gefunden werden, wobei im Falle nicht optimaler Einstellungen meist die Anpressdauer erhöht wurde, wodurch sich die Durchlaufzeiten erhöhten.

Bei der in Fig. 7 dargestellten Presseinrichtung ist der Anpressdruck in alle Andrückzonen 7, 7', 7" über eigene Stellfedern 35 individuell auf die in Bearbeitung befindliche Verpackungseinheit 2 einstellbar, sodass für jeden Bereich die richtigen Parameter gefunden und eingestellt werden können. In den einzelnen Andrückzonen 7, 7', 7" können in einer bevorzugten Ausführungsform die herrschenden Druck- und Temperaturbedingungen über entsprechende Sensoren direkt an der Verpackungseinheit gemessen werden, sodass bei der empirischen Ermittlung der optimalen Einstellungen anhand der aufgezeichneten Messwerte eine systematische Vorgehensweise ermöglicht wird, die auf den tatsächlich herrschenden Bedingungen basiert. Die Verwendung von Parametern, die mit eigenen Sensoren gemessenen, und nicht aufgrund der eingestellten Werte abgeleitet werden, erlaubt es, die erzielten Ergebnisse direkt mit Messwerten und Einstellungen zu vergleichen, die bei Maschinen ähnlicher Bauart gemessen und aufgezeichnet wurden.

Die in den einzelnen Andrückzonen 7, 7', 7" gemessenen Werte ermöglichen es erstmals, die Verfahrensparameter direkt mit den jeweiligen Materialkennwerten in Zusammenhang zu bringen. Die Materialkennwerte sind dabei insbesondere die Papierstärke, die Anzahl der Papierlagen in der entsprechenden Zone, die Kennwerte des verwendeten Versiegelungsmaterials (z.B. eines Heißschmelzklebstoffs einer bestimmten Marke) und die Anzahl der in der Zone zu versiegelnden Versiegelungsoberflächen 4. Je nachdem, ob an der Außenseite (beim geöffneten Beutel) der Seitenflanken 32 ebenfalls Versiegelungsoberflächen vorgesehen sind oder nicht, können beispielsweise in den beiden seitlichen Andrückzonen 7, 7" zwei oder drei zu versiegelnde Flächenpaare vorhanden sein, auch wenn in beiden Fällen die gleiche Anzahl an Papierlagen verpresst wird. Alle diese Parameter können etwa vom Hersteller der Verpackungseinheiten bzw. der Verschließeinrichtung 1 zentral gesammelt und aufgezeichnet, und den Kunden, die die erfindungsgemäßen Vorrichtungen verwenden, in aufbereiteter Form zur Verfügung gestellt werden.

Eine derartige systematische Vorgehensweise erlaubt es, bei neu eingerichteten Maschinen (oder nach einer Umrüstung der Maschine auf neue Verpackungseinheiten) schon vor den ersten Testdurchläufen Einstellungen zu verwenden, die den optimalen Einstellungen bereits gut angenähert sind. Dies verkürzt nicht nur die Vorlaufzeiten für die Produktion, sondern verringert auch die Menge der beim Einstellen der Anlage anfallenden Ausschussware. Die in jeder der Andrückzonen 7, 7', 7" einzeln optimierbaren Parameter für den Druck und die Temperatur erlauben es überdies, den Wert für den dritten Parameter, die Anpressdauer, zu minimieren. Dadurch ist es möglich, die Taktzeiten zu verringern und somit den Durchsatz zu erhöhen.

Die in Fig. 7 dargestellte Ausführungsform mit dreigeteilten, einzeln federnd gelagerten Andrück- bzw. Gegendrückplatten 13, 14 ermöglicht eine sehr genaue Anpassung der einzelnen Andrückzonen 7, 7', 7", in einigen Fällen kann es jedoch vorteilhaft sein, die unterschiedlichen Druckzonen in einer flexiblen Andrück- bzw. Gegendrückplatte auszubilden, wie sie etwa in Fig. 7a dargestellt ist. Der Anpressdruck wird dabei durch die in den einzelnen Zonen unterschiedliche Materialdicke des elastischen Plattenmaterials bestimmt. In Verbindung mit den unterschiedlichen Materialdicken ergibt sich für jede Andrückzone 7, 7', 7" ein bestimmter, vom Gesamtanpressdruck abhängiger Anpressdruck. Ein Umrüsten der Anlage auf andere Verpackungseinheiten könnte dabei einfach durch Auswechseln der Andrück- 13 bzw. Gegendrückplatte 14 erfolgen. Diese Ausführungsform weist somit zwar geringere Einstellmöglichkeiten auf, als die mehrteilige Ausbildung der Fig. 7, sie ermöglicht im Gegenzug jedoch eine größere Formenvielfalt, sodass die Vorrichtung etwa auch auf eine unterschiedliche Abmessung der Andrückzonen 7, 7', 7" angepasst werden kann, die sich beispielsweise bei unterschiedlich dicken Verpackungseinheiten 2 aufgrund der unterschiedlich breiten Seitenflanken 32 ergeben kann. Die Übergänge zwischen den einzelnen Andrückzonen 7, 7', 7" können bei dieser Ausführungsform auch mit einem verlaufenden Übergang versehen sein, sodass das Einprägen von Kanten in das Material, die zu einem Materialbruch führen können, vermieden werden.

Auch wenn die Pressköpfe der erfindungsgemäßen Verschließeinrichtungen 1 hierin mit drei Andrückzonen 7, 7', 7" beschrieben sind, ist die Erfindung auch für Verpackungseinheiten 2 verwendbar, die mehr als 3 unterschiedliche Druckzonen aufweisen. Eine weitere Andrückzone könnte etwa erforderlich sein, wenn die Verpackungseinheit 2 eine Nahtstelle aufweist, sodass beispielsweise im doppellagigen Mittelbereich ein kurzer Abschnitt mit vier Lagen vorhanden ist. Auch könnte im Versiegelungsbereich der Verpackungseinheiten eine Materialverstärkung für einen Tragegriff vorgesehen sein, die ebenfalls in einem beschränken Bereich zu einer größeren Materialdicke führt. Eine ähnliche Wirkung lässt sich mit der in Fig. 7a gezeigten Verschließeinrichtung erzielen, deren Andrückplatte bzw. Gegendrückplatte als flexible Platten mit unterschiedlichen Druckzonen ausgebildet sind. Dabei werden die unterschiedlichen Druckzonen nicht durch verschiedene Federelemente, sondern durch die Elastizität der Platten selbst gebildet. Die elastischen Platten weisen eine über den ganzen Druckbereich durchgängige Oberfläche auf, sodass Bruchkanten, die sich bei der Verwendung unterteilter Druckplatten am Verpackungsmaterial im Bereich der Trennfugen ergeben könnten, vermieden werden. Diese Ausführungsform mit den flexibel ausgebildeten Platten ist für solche anspruchsvolleren Formen besonders gut geeignet.

Die Fig. 8 zeigt eine Presseinrichtung 10 mit einer darunter angeordneten, schematisch dargestellten Verpackungseinheit 2 in einer Stirnansicht. Über der Verpackungseinheit 2 ist ein mit einer Absaugvorrichtung verbundener Absaugstutzen 12 dargestellt, über den unmittelbar vor dem Versiegeln Luft aus der Verpackungseinheit absaugen kann. Der Absaugstutzen 12 kann zusätzlich oder alternativ zu der in Fig. 2 dargestellten Absaugvorrichtung 20 vorgesehen sein.

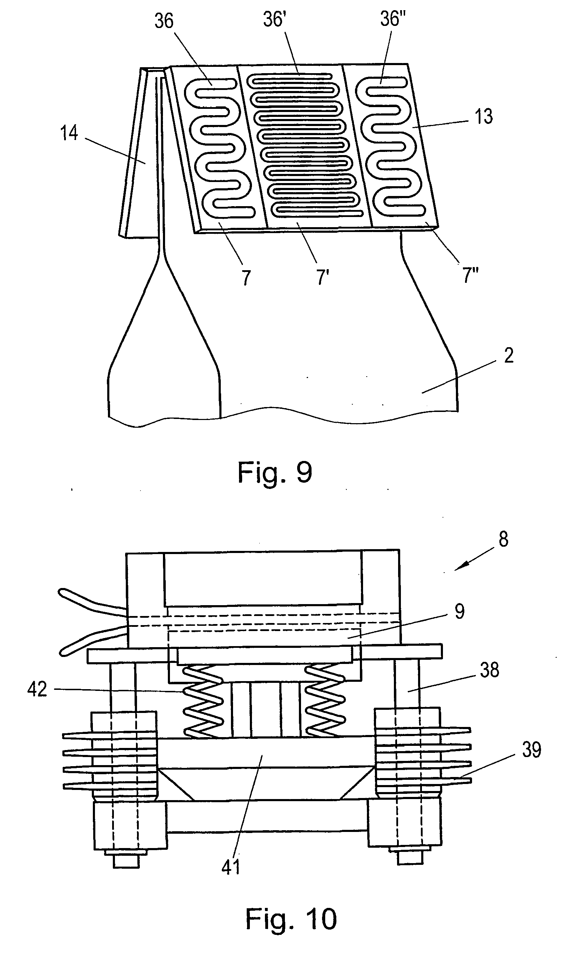

Fig. 9 zeigt eine schematische Darstellung der Andrück- 13 bzw. Gegendrückplatten 14 eine Presseinrichtung, wobei in den einzelnen Andrückzonen 7, 7', 7" jeweils entsprechende Heizelemente 36, 36', 36" vorgesehen sind, über die die Temperaturen in den einzelnen Zonen unabhängig voneinander eingestellt werden können. Die Heizelemente 36, 36', 36" können entweder direkt in der Andrückplatte 13 bzw. der Gegendrückplatte 14, oder dahinter im Zangenbacken der Presseinrichtung 10 angeordnet sein.

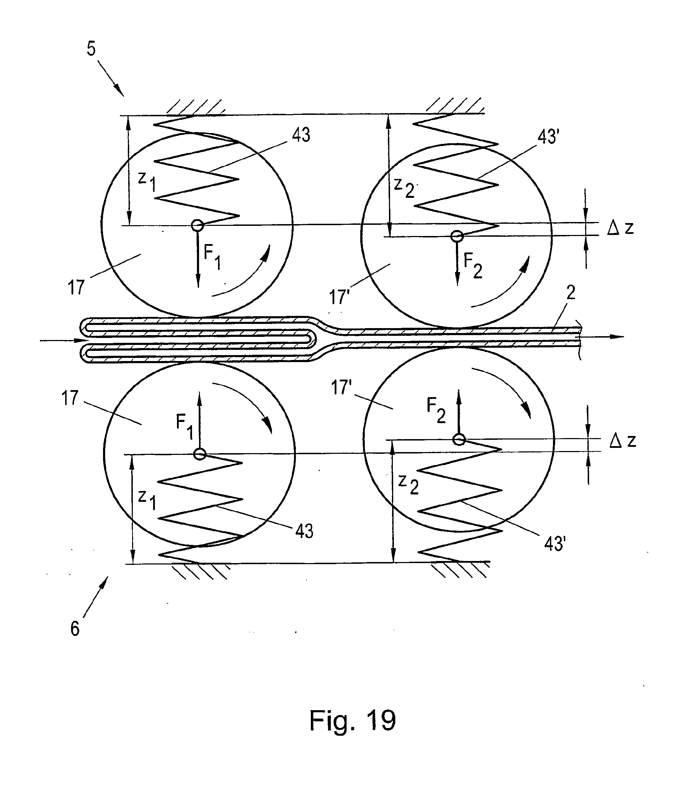

In einer weiteren Ausführungsform der Erfindung sind die Andrückeinrichtung 5 und die Gegendrückeinrichtung 6, die zum Versiegeln der Verpackungseinheiten 2 verwendet werden, als federnd gegeneinandergespannte und gegebenenfalls beheizte Andrückrollen 17 mit glatter oder mit profilierter Mantel-Oberfläche ausgebildet, die durch Anpressfedern 43 gegeneinander vorgespannt sind. Die Versiegelungsbereiche der Verpackungseinheiten 2 werden zum Versiegeln zwischen den gegeneinander vorgespannten Andrückrollen 17 durchgeführt. In Fig. 19 ist die Wirkungsweise solcher Andrückfedern 17 schematisch dargestellt. Fig. 19 zeigt eine Draufsicht auf zwei Andrückrollen-Paare 17, 17', zwischen denen eine Verpackungseinheit 2 durchgeführt wird. Die Andrückrollen 17, die an dem von der eingefalteten Seitenflanke 32 verursachten, breiteren Bereich der Verpackungseinheit 2 ansetzen, werden aufgrund der größeren Materialdicke weiter auseinandergedrückt, als die Andrückrollen 17', die am schmäleren Bereich ansetzen. Daher weist auch der Federweg (z₁, z₂), der die Anpresskraft (F₁, F₂) festlegt, entsprechend der Dicke des dazwischenliegenden Materials je nach Position der Andrückrollen 17, 17' eine Differenz auf (Δz).

Die unterschiedlichen Druckzonen ergeben sich also aufgrund der unterschiedlich dicken Materialschichten, wobei eine dickere Materialschicht eine höhere Federkraft bewirkt. Da dieser Dickenunterschied typischer Weise nur 1 bis 2 mm oder weniger beträgt, müssen für die Andrückrollen 17, 17' solche Andrückfedern 43, 43' gewählt werden, die aufgrund ihrer Federkennlinie bereits bei diesen kleinen Änderungen Δz des Federwegs die entsprechenden Druckänderungen bewirken. Das Verhältnis zwischen der Vorspannung der Andrückfedern 43, 43' und der Differenz des Anpressdrucks zwischen dickem und dünnem Materialbereich lässt sich durch die Auswahl einer Feder mit einer passenden Federkennlinie (z.B. lineare Kennlinie: gleiche Differenz bei geänderter Vorspannung; progressive Kennlinie: Differenz vergrößert sich mit zunehmender Vorspannung; degressive Kennlinie: Differenz verringert sich mit zunehmender Vorspannung; oder unstetige Kennlinie) beeinflussen.

Um komplexere Einstellungen zu ermöglichen, könnten die unterschiedlichen Druckeinstellungen auch über eine Kulissensteuerung, die auf die vorbeilaufenden Verpackungseinheiten 2 abgestimmt ist, gesteuert werden. Die Anpressdauer kann durch die Geschwindigkeit der Verpackungseinheiten 2 bzw. der Rotationsgeschwindigkeit der Andrückrollen 17, 17' geregelt werden.

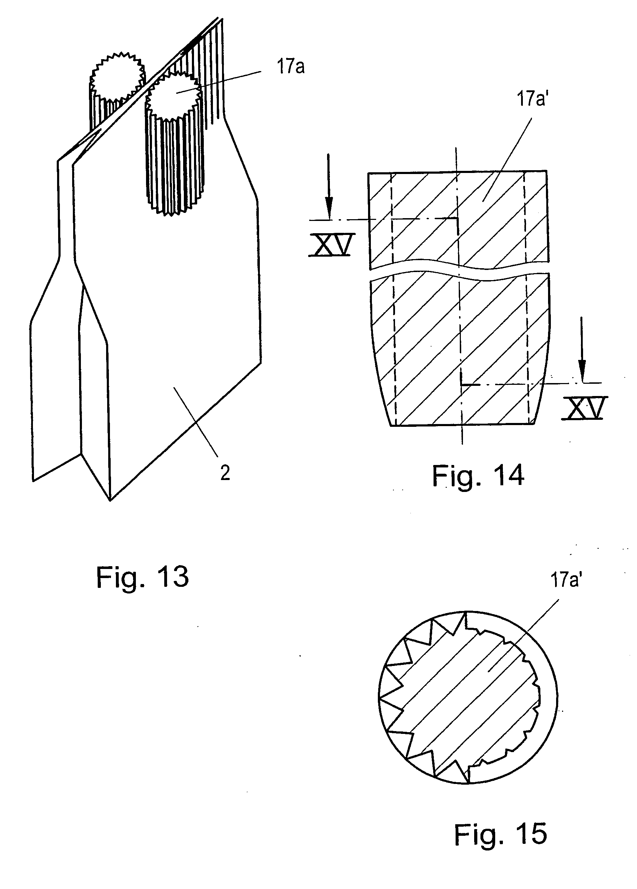

Als Beispiel für eine Rolle mit einer profilierten Oberfläche ist in Fig. 13 ein Rollenpaar 17a mit einer geriffelten Mantel-Oberflächen zur Erzeugung einer profilierten Verpackungsoberfläche im Versieglungsbereich schematisch dargestellt. Um zu verhindern, dass am unteren Rand der bearbeiteten Fläche ein allzu scharfkantiger Übergang entsteht, an der die Verpackung reißen könnte, kann, wie dies in Fig. 14 dargestellt ist, die Andrückrolle 17a' im unteren Bereich konisch verjüngt sein. Fig. 15 zeigt eine Schnittansicht entlang der Linie XV-XV der Fig. 14, wobei die unterschiedlich tiefe Riffelung im oberen und im unteren Rollenbereich zu erkennen ist.

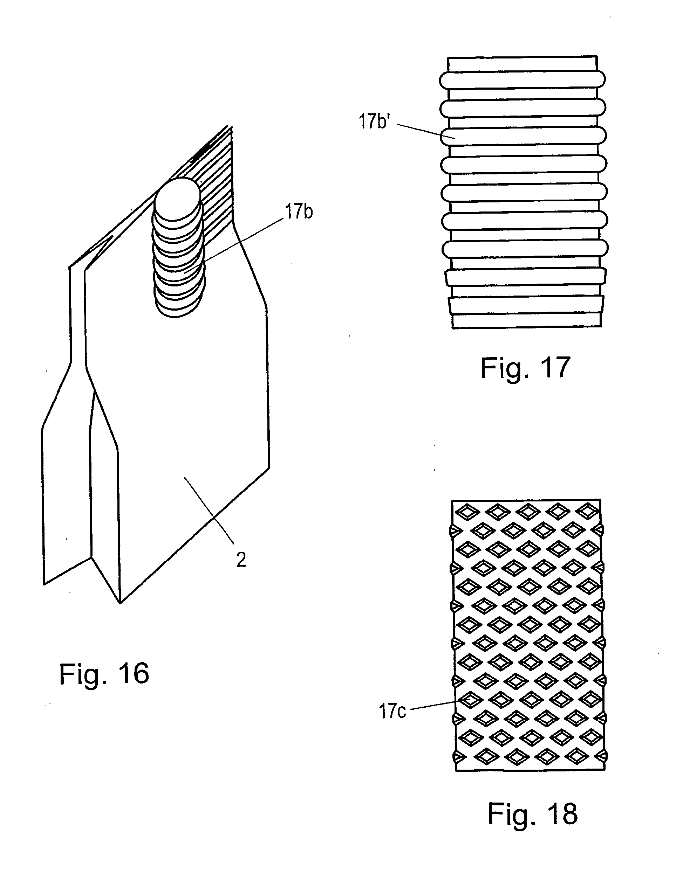

Fig. 16 zeigt ein weiteres Paar Andrückrollen 17b mit einer profilierten Mantel-Oberflächen zur Erzeugung von längsverlaufenden Pressrillen. Auch diese Rollen können zur Vermeidung von Bruchkanten im unteren Bereich verjüngt ausgebildet sein, wie dies bei der Andrückrolle 17b' der Fig. 17 der dargestellt ist.

Ein weiteres Beispiel für eine profilierte Mantel-Oberfläche ist die in Fig. 18 dargestellte Andrückrolle 17c, die eine waffelartig ausgebildete Oberfläche aufweist.

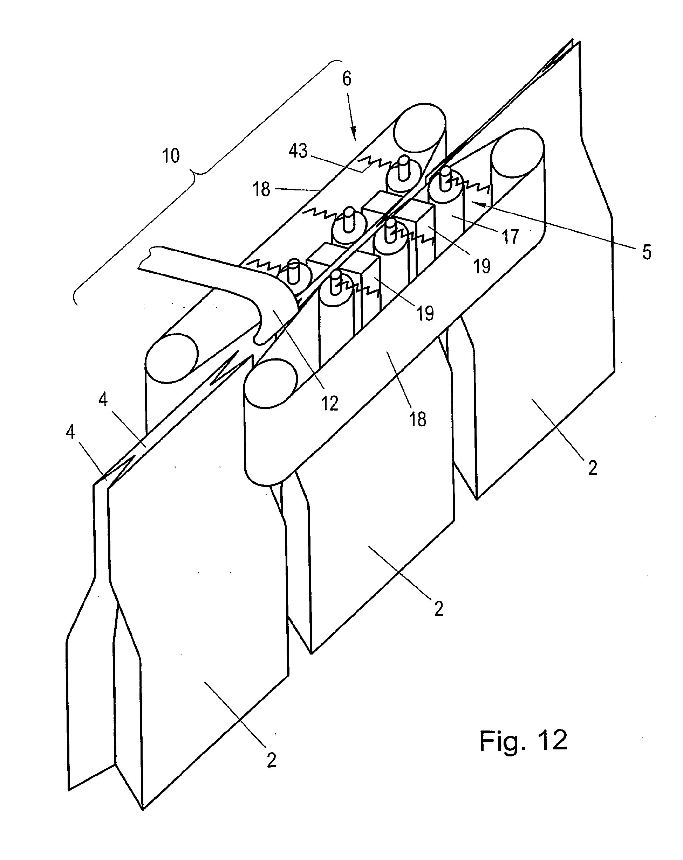

In Fig. 12 ist eine weitere vorteilhafte Ausführungsform der Erfindung dargestellt. Dabei sind die Verpackungseinheiten 2 im Bereich der Presseinrichtung 10 auf der Höhe ihrer Versieglungsoberflächen 4 zwischen Transportbändern 18 gehalten, welche zwischen der Andrückeinrichtung 5 und der Gegendrückeinrichtung 6 durchgeführt sind. Die Andrückeinrichtung 5 und die Gegendrückeinrichtung 6 sind als mehrere Paare Andrückrollen 17 ausgebildet, die hinter den Transportbändern angeordnet, und über Anpressfedern 43 gegeneinander vorgespannt sind. Die Wirkungsweise ist analog zu der im Zusammenhang mit Fig. 19 beschriebenen, wobei die Anpresskraft jedes Rollenpaars aufgrund der Transportbänder 18 über einen breitern Bereich verteilt wird, als dies bei Rollen der Fall ist, die direkt am Verpackungsmaterial angreifen.

Um die durch die Andrückrollen 17 zwischen den Transportbändern aneinandergepressten Versiegelungsoberflächen 4 zu erwärmen, können vor, nach oder zwischen den Rollenpaaren Induktionsspulen 19 angeordnet sein, wobei die Transportbänder 18 induktiv erwärmbare Metallelemente enthalten. Da es mit den Induktionsspulen 19 möglich ist, die Transportbänder 18 in einem klar festgelegten Bereich aufzuheizen, ist es möglich, die durchlaufenden Verpackungseinheiten 2 zielgenau zu erwärmen. Durch eine intermittierende Schaltung können die Induktionsspulen 19 in den Freiräumen zwischen zwei Verpackungseinheiten 2 abgeschalten werden, sodass die Transportbänder 19 nur in den Bereichen erwärmt werden, zwischen denen auch Verpackungseinheiten 2 gehalten sind.

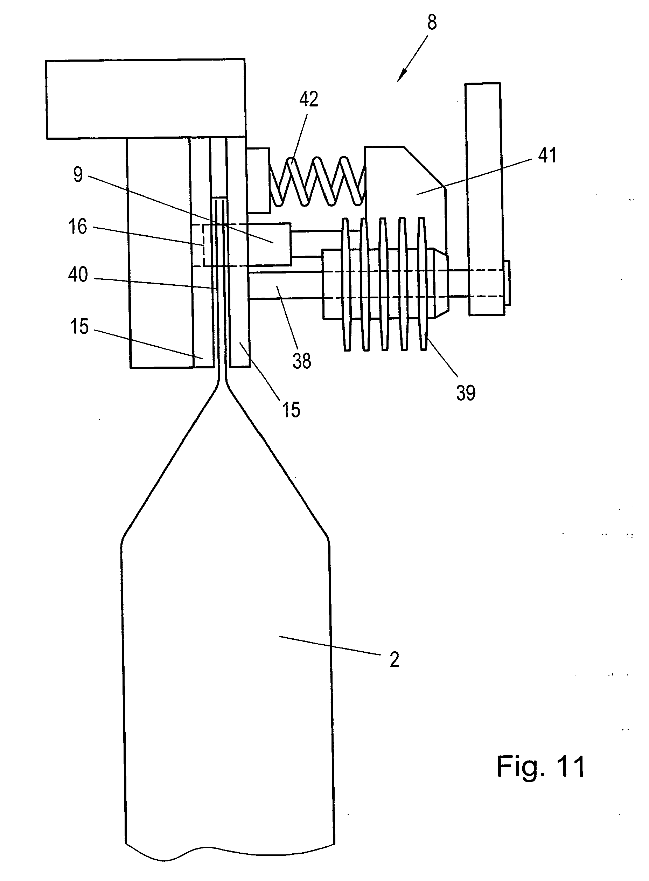

Nachdem die Öffnung der Verpackungseinheit 2 von der Presseinrichtung 10 versiegelt worden ist, wird sie vom Förderband 21 zu einer Kühleinrichtung 8 transportiert, die mit einer integrierten Stanze 9 zum Einbringen einer Trageöffnung 37 versehen ist. Eine beispielhafte Kühleinrichtung 8 ist in Fig. 10 in einer Draufsicht und in Fig. 11 in einer Stirnansicht dargestellt. Der bereits versiegelte Verschlussbereich der Verpackungseinheit 2 wird zum Stanzen in einen Führungsschlitz 40 eingeführt, wo die Klinge der Stanze 9 von der Seite her eine Trageöffnung 37 durch das Material im versiegelten Bereich stanzt. Die Stanze ist auf einem Stanzschlitten 41 angeordnet, der auf zwei Führungsstangen 38 quer zum Führungsschlitz 40 durch einen der Übersichtlichkeit halber nicht dargestellten vorzugsweise hydraulischen, pneumatischen oder elektromagnetischen Antrieb bewegbar ist. Nach dem Stanzen wird der Stanzschlitten 41 durch zwei Rückholfedern 42 in seine Ausgangslage zurückgedrückt. Um die Versiegelungsoberflächen 4 nach dem Verpressen und Erhitzen zur Unterstützung der Aushärtung abzukühlen, ist im Bereich des Führungsschlitzes 40 eine Kühlung für den Versiegelungsbereich der Verpackungseinheit vorgesehen. Dazu sind von außen an die Verpackungseinheit im Bereich der Versiegelung anleg- bzw. andrückbare Kühlplatten 15 vorgesehen, mittels derer die Wärme aus dem Versiegelungsbereich der Verpackung, z.B. über Kühlrippen 39, abgeführt wird.

Die Schneidekante 16 der Stanze 9 ist vorzugsweise zur Oberseite der Verpackungseinheit 2 hin unterbrochen, wie dies bei der in Fig. 2 dargestellten Trageöffnung 37 gezeigt ist. Um die Verpackungseinheit 2 an der dadurch geschaffenen Trageöffnung 37 zu ergreifen, wird der ausgestanzte Bereich an der unterbrochenen Stelle nach hinten umgefaltet, sodass sich in dem Bereich, der von der Hand umfasst wird (Griffbereich) eine doppelte Materialschicht befindet, welche die Stabilität des Griffbereichs erhöht. Da die Finger der Tragehand die Trageöffnung 37 nur an der gefalteten Stelle ergreifen, werden Schnittverletzungen, die an den scharfen Schnittkanten auftreten können, vermieden, und das Tragegefühl wird durch die bessere Druckaufteilung verbessert, da sich der Griff nicht so stark in die Hand eindrückt.

Bei einer nicht dargestellten Ausführungsvariante könnte die Aktivierung der Verklebung durch einen Ultraschallgenerator oder Mikrowellengenerator erfolgen. Dazu ist dann die Verschließeinheit in einem strahlungsabschirmenden Gehäuse angeordnet, um Bedienungspersonen nicht zu gefährden. Das Verpressen wird dann mittels Rollen oder Platten vorgenommen.

## Patentansprüche

1. Verschließeinrichtung zum Verschließen von vorzugsweise beutelförmigen Verpackungseinheiten (2) durch Zusammendrücken, welche entlang der zu verschließenden Verpackungsöffnung Bereiche unterschiedlicher Dicke aufweisen, wie etwa Blockbodenbeutel, insbesondere aus beschichtetem oder unbeschichtetem Papier-, Karton-, Kunststoff-, Folien- und/oder Gewebe-Material, welche Verpackungseinheiten (2) zumindest eine integrierte oder auf das Material aufgebrachte, zum dauerhaften Verbinden mit einer anliegenden bzw. angepressten gegenüberliegenden Oberfläche geeignete Versiegelungsoberfläche (4) aufweist, wobei die Verschließeinrichtung (1) eine Presseinrichtung (10) mit zumindest einer Andrückeinrichtung (5) und zumindest einer Gesendrückeinrichtung (6) aufweist, zwischen denen die Verpackungseinheiten (2) im Bereich ihrer Versiegelungsoberfläche(n) (4) vorzugsweise unter Wärmeaufbringung zusammendrückbar sind, **dadurch gekennzeichnet, dass** die Andrückeinrichtung (5) und die Gegendrückeinrichtung (6) als federnd gegeneinandergespannte und gegebenenfalls beheizte Andrückrollen (17) ausgebildet sind, welche entlang der zu verschließenden Verpackunpöffnung von der Dicke der Materialschicht abhängige Zonen unterschiedlichen Drucks aufweisen.

2. Verschließeinrichtung nach Anspruch 1, **dadurch gekennzeichnet, dass** die federnd gegeneinander gespannte Andrückrollen (17) mit glatter oder mit profilierter Mantel-Oberfläche ausgebildet sind.

3. Verschließeinrichtung nach Anspruch 2, **dadurch gekennzeichnet, dass** die Andrückrollen (17) eine profilierte Mantel-Oberfläche, wie zum Beispiel eine oder mehrere Längs-, Quer- oder Diagonalriffelung(en) aufweisen.

4. Verschließeinrichtung nach einem der Ansprüche 1 bis 3, **dadurch gekennzeichnet, dass** die Verschließeinrichtung (1), vorzugsweise in einer Kühleinrichtung (8) integriert, weiters eine Stanze (9) zum Einbringen einer Trageδffnung (37) in die Verpackungseinheit (2) aufweist

5. Verschließeinrichtung nach Anspruch 4, **dadurch gekennzeichnet, dass** die Stanze (9) eine oder mehrere Schneidekanten (16) aufweist, von welchen zumindest eine zur Oberseite der Verpackungseinheit (2) hin unterbrochen ist.

6. Verschließeinrichtung nach einem der vorhergehenden Ansprüche, **dadurch gekennzeichnet, dass** die Verchließeinrichtung (1) eine vorzugsweise vor der Presseinrichtung (10) angeordnete Einrichtung (11) zum Beschneiden des oberen Behältnisrandes aufweist, die gegebenenfalls mit einer Absaugvorrichtung (20) versehen ist.

7. Verschließeinrichtung nach einem der vorhergehenden Ansprüche, **dadurch gekennzeichnet, dass** auf den Versiegelungsoberflächen (4) der Verpackungseinheiten (2) ein Heißschmelzklebstoff aufgebracht ist

8. Verschließeinrichtung nach einem der vorhergehenden Ansprüche, dadurch gekennzeichet, dass an der Andrückeinrichtung (5) und/oder der Gegendrückeinrichtung (6) sowie gegebenenfalls auch in der Kühleinrichtung Druck- und/oder Temperatursensoren vorgesehen sind.

9. Verschließeinrichtung nach einem der vorhergehenden Ansprüche, **dadurch gekennzeichnet, dass** in der Verschließeinrichtung die Verpackungseinheiten (2) auf Höhe ihrer Versieglungsoberflächen (4) zwischen Transportbändern (18) gehalten sind, welche zwischen der Andrückeinrichtung (5) und der Gegendrückeinrichtung (6) durchgeführt sind, wobei die Transportbänder (18) induktiv erwärmbare Metallelemente enthalten, und wobei im Bereich der Presseinrichtung (10) eine oder mehrere Induktionsspule(n) (19) zum Erwärmen des Transportbandes (18) vorgesehen sind.

## Claims

1. A closure device for closing preferably bag-shaped packing units (2) by pressing them together, which packing units (2) have regions of different thickness along the packing opening to be closed, such as block-bottom bags, in particular of coated or noncoated paper, cardboard, plastics material, foil and/or fabric material, which packing units (2) have at least one sealing surface (4) which is integrated or applied to the material and which is suitable for permanent bonding with an opposed surface resting thereon or pressed thereon, wherein the closure device (1) has a press device (10) with at least one pressure device (5) and at least one counter pressure device (6), between which the packing units (2) are capable of being pressed together in the region of the sealing surface or surfaces (4) thereof, preferably with the application of heat, **characterized in that** the pressure device (5) and the counter pressure device (6) are designed in the form of pressure rolls (17) which are pressed against each other in a springing manner and are optionally heated and which have zones of different pressure dependent upon the thickness of the layer of material along the packing opening to be closed.

2. A closure device according to Claim 1, **characterized in that** the pressure rolls (17) pressed against each other in a springing manner are designed with a smooth or with a profiled outer surface.

3. A closure device according to Claim 2, **characterized in that** the pressure rolls (17) have a profiled outer surface such as for example one or more longitudinal, transverse or diagonal cannelures.

4. A closure device according to any one of Claims 1 to 3, **characterized in that** the closure device (1), preferably integrated in a cooling device (8), additionally has a punch for forming a carrying opening (37) in the packing unit (2).

5. A closure device according to Claim 4, **characterized in that** the punch (9) has one or more cutting edges (16), at least one of which is interrupted towards the top side of the packing unit (2).

6. A closure device according to any one of the preceding Claims, **characterized in that** the closure device (1) has a device (11), preferably situated in front of the press device (10), for trimming the upper edge of the container, which trimming device (11) is optionally provided with a suction apparatus (20).

7. A closure device according to any one of the preceding Claims, **characterized in that** a hot-melt adhesive is applied to the sealing surfaces (4) of the packing units (2).

8. A closure device according to any one of the preceding Claims, **characterized in that** pressure and/or temperature sensors are provided on the pressure device (5) and/or the counter pressure device (6) as well as optionally also in the cooling device.

9. A closure device according to any one of the preceding Claims, **characterized in that** in the closure device the packing units (2) are held at the level of the sealing surfaces (4) thereof between conveyor belts (18) which extend between the pressure device (5) and the counter pressure device (6), wherein the conveyor belts (18) contain metallic elements capable of being inductively heated, and wherein one or more induction coils (19) for heating the conveyor belt (18) are provided in the region of the press device (10).

## Revendications

1. Dispositif de fermeture pour fermer des unités d'emballage (2), de préférence en forme de sachets, par compression, lesquelles présentent le long de l'ouverture d'emballage à fermer des zones de différente épaisseur, comme des sachets à fond plat, en particulier en matériau de papier, carton, plastique, film et/ou tissu revêtu ou non revêtu, lesquelles unités d'emballage (2) présentent au moins une surface de scellement (4) intégrée ou appliquée sur le matériau, appropriée à la liaison durable avec une surface opposée collée ou pressée, sachant que le dispositif de fermeture (1) présente un dispositif de pressage (10) avec au moins un dispositif de serrage (5) et au moins un dispositif de serrage antagoniste (6), entre lesquels les unités d'emballage (2) peuvent être comprimées dans la zone de leur(s) surface(s) de scellement (4) de préférence en appliquant de la chaleur, **caractérisé en ce que** le dispositif de serrage (5) et le dispositif de serrage antagoniste (6) sont réalisés comme des galets presseurs (17) éventuellement chauffés et serrés l'un contre l'autre de manière élastique qui présentent, le long de l'ouverture d'emballage à fermer, des zones dépendant de l'épaisseur de la couche de matériau de différente pression.

2. Dispositif de fermeture selon la revendication 1, **caractérisé en ce que** les galets presseurs (17) serrés l'un contre l'autre de manière élastique sont réalisés avec une surface d'enveloppe lisse ou profilée.

3. Dispositif de fermeture selon la revendication 2, **caractérisé en ce que** les galets presseurs (17) présentent une surface d'enveloppe profilée telle qu'une ou plusieurs cannelures longitudinales, transversales ou diagonales.

4. Dispositif de fermeture selon l'une quelconque des revendications 1 à 3, **caractérisé en ce que** le dispositif de fermeture (1), intégré de préférence dans un dispositif de refroidissement (8), présente en outre une poinçonneuse (9) pour l'introduction d'une ouverture de support (37) dans l'unité d'emballage (2).

5. Dispositif de fermeture selon la revendication 4, **caractérisé en ce que** la poinçonneuse (9) présente un ou plusieurs bords incisifs (16), parmi lesquels au moins un bord est interrompu vers le côté supérieur de l'unité d'emballage (2).

6. Dispositif de fermeture selon l'une quelconque des revendications précédentes, **caractérisé en ce que** le dispositif de fermeture (1) présente un dispositif (11) disposé de préférence devant le dispositif de pressage (10) pour rogner le bord supérieur du récipient, lequel dispositif (11) est éventuellement pourvu d'un dispositif d'aspiration (20).

7. Dispositif de fermeture selon l'une quelconque des revendications précédentes, **caractérisé en ce qu'**une colle thermofusible est appliquée sur les surfaces de scellement (4) des unités d'emballage (2).

8. Dispositif de fermeture selon l'une quelconque des revendications précédentes, **caractérisé en ce que** des capteurs de pression et/ou de température sont prévus sur le dispositif de serrage (5) et/ou le dispositif de serrage antagoniste (6) ainsi qu'éventuellement aussi dans le dispositif de refroidissement.

9. Dispositif de fermeture selon l'une quelconque des revendications précédentes, **caractérisé en ce que** les unités d'emballage (2) sont maintenues dans le dispositif de fermeture au niveau de leurs surfaces de scellement (4) entre des bandes de transport (18) qui sont passées entre le dispositif de serrage (5) et le dispositif de serrage antagoniste (6), sachant que les bandes de transport (18) contiennent des éléments métalliques pouvant être chauffés par induction, et sachant qu'une ou plusieurs bobines d'induction (19) sont prévues dans la zone du dispositif de pressage (10) pour le réchauffement de la bande de transport (18).
